**Europäisches Patentamt**

(19) **European Patent Office**

**Office européen des brevets**

(11) Publication number: **0 072 304**

**B1**

(12) **EUROPEAN PATENT SPECIFICATION**

(45) Date of publication of patent specification: **20.11.86**

(21) Application number: **82401435.1**

(22) Date of filing: **30.07.82**

(51) Int. Cl.⁴: **G 01 V 5/06**

(54) Natural gamma ray spectrum analysis and filtering technique.

(30) Priority: **31.07.81 EP 81401249**
**01.03.82 US 353228**

(43) Date of publication of application:
**16.02.83 Bulletin 83/07**

(45) Publication of the grant of the patent:
**20.11.86 Bulletin 86/47**

(84) Designated Contracting States:
**DE FR GB IT NL**

(56) References cited:
**FR-A-2 342 507**
**GB-A-2 050 600**
**US-A-3 976 878**
**US-A-4 187 908**

(73) Proprietor: **SOCIETE DE PROSPECTION ELECTRIQUE SCHLUMBERGER**
**42, rue Saint-Dominique**
**F-75340 Paris Cedex 07 (FR)**
㊶ **FR IT**
(73) Proprietor: **Schlumberger Limited**
**277 Park Avenue**
**New York, N.Y. 10172 (US)**
㊶ **DE GB NL**

(72) Inventor: **Ruckebusch, Guy Bernard**
**36 Shields Lane**
**Ridgefield Connecticut 06877 (US)**

(74) Representative: **Hagel, Francis**
**Service Brevets ETUDES ET PRODUCTIONS SCHLUMBERGER B.P. 202**
**F-92142 Clamart Cedex (FR)**

Courier Press, Leamington Spa, England.

# 0 072 304

**Description**

The invention is in the field of well logging, in which measurements taken in boreholes are used in searching for and exploiting valuable underground resources such as oil and gas. It is particularly directed to a method and a system related to energy windows logs, such as logs of the gamma radiation detected in several energy windows. It is further directed to a method and system for converting energy windows logs into logs of selected subsurface materials, such as thorium, uranium and potassium. The invention relates to logging natural as well as induced gamma radiation.

In the example of natural gamma radiation logging, a tool capable of detecting gamma radiation in each respective one of several energy windows passes through a selected borehole interval and measures the gamma ray photons detected in the respective windows in each respective one of a succession of small (e.g. 152 mm 6-inch) depth intervals. The rays are emitted in the radioactive decay of subsurface materials such as thorium, uranium and potassium, each of which emits with characteristic energy spectra. The tool output is converted to a log of the respective emitting materials.

The log of materials such as thorium, uranium and potassium is important in the search for and exploitation of underground resources because it is believed that these materials appear in nature with a discernible relationship to geology and rock morphology. As some nonlimiting examples, it is believed that the ratio of thorium to uranium can be used for determining the geochemical facies in sedimentary rocks, the uranium to potassium ratio can be used to estimate the source rock potential of argillaceous sediments and that the thorium to potassium ratio can be used for determining the mineralogical composition of the shale. Perhaps most importantly, it is believed that by using the thorium, uranium and potassium concentrations either individually or in combination it is possible to measure the presence, type and volume of shale or clay in the formations surrounding the borehole, which is particularly important in the search for and exploitation of oil and gas deposits.

While it is known that thorium, uranium and potassium emit gamma rays with characteristic discrete energy spectra, it is also known that between their emission and their detection those gamma rays undergo various interactions with the formation, the borehole and the tool and that, consequently, their apparent energy spectra as detected are continuous and have a poor energy resolution. Additional uncertainties are introduced by the fact that relatively few gamma ray photons can be detected in the respective energy windows at a given borehole depth because the tool must move through the borehole at a sufficiently high speed to allow drilling or production activities to resume as soon as possible.

Some aspects of known gamma radiation well logging are discussed in Marrett, G. et al., "Shaly Sand Evaluation Using Gamma Ray Spectrometry, Applied to the North Sea Jurassic," Proc. SPWLA 17th Annual Logging Symposium, June 9—12, 1976, and Serra, O. et al., "Theory Interpretation and Practical Applications of Natural Gamma Ray Spectroscopy," Proc. SPWLA 21st Annual Logging Symposium, July 8—11, 1980, and additional information can be found in Chevalier et al U.S. Patent 3,976,878, U.K. Patent Application GB—A—2 050 600 and Moran et al. U.S. Patent 3,521,064. As discussed in the cited documents, it is possible to convert the output of a natural gamma radiation logging tool having three or five energy windows into a log of thorium, uranium and potassium concentration (Th,U,K), in essence by subjecting the tool output to a filter characterized by a $3\times3$ or $3\times5$ matrix which can be empirically derived—such as by passing the tool through a test borehole containing known concentrations of Th,U,K arranged to approximate the effect of homogeneous beds of infinite depth extent and recording the windows responses. If W designates the radiation detected in five energy windows at a given borehole depth level, i.e., $W=<W1, W2, W3, W4, W5>$, and X designates the thorium, uranium and potassium concentrations at the same depth level, i.e., $X=<Th,U,K>$, then the relationship between the windows measurements W and the concentrations X can be described by:

$$W=HX \qquad\qquad (1a)$$

where H is defined by a $5\times3$ tool sensitivity matrix which is unique to a given tool and can be empirically derived by passing the tool through a borehole containing known concentrations of Th,U,K in idealized beds. What is of interest normally is the concentrations of Th,U,K as a function of the radiation detected in the windows, and therefore what is of interest is the relationship:

$$X=MW \qquad\qquad (2a)$$

where M is defined by a $3\times5$ matrix relating the concentrations of the three materials to the radiation detected in the five energy windows at a given depth level in the borehole. The matrix M is not the inverse of the matrix H because a nonsquare matrix does not have a direct inverse, in the strict sense of the term, but M can be found, with the help of the above-described empirical process, by an inversion through a least squares technique relating known concentrations Th,U,K to measured radiation in the five energy windows for given test conditions. Of course the matrix M need be found only once for a given logging tool. In the case of a particular tool the following empirically derived numerical matrices H and M can be used for a standard (8"-diameter, water-filled) borehole, where W is in counts per second (average number of

2

scintillator-detected photon-interaction flashes per second while the tool is in a given 152 mm (6") interval of borehole depth), the Th and U concentrations are in ppm and the K concentration is in %:

$$
\begin{vmatrix} W1 \\ W2 \\ W3 \\ W4 \\ W5 \end{vmatrix} = \begin{vmatrix} 10.13660 & 21.77220 & 37.47680 \\ 3.27358 & 6.41613 & 16.59690 \\ .61623 & 1.61744 & 7.51860 \\ .32686 & .56565 & .0 \\ .46439 & .16434 & .0 \end{vmatrix} \times \begin{vmatrix} Th \\ U \\ K \end{vmatrix} \quad (1b)
$$

$$
\begin{vmatrix} Th \\ U \\ K \end{vmatrix} = \begin{vmatrix} .06184 & .13764 & .00442 & .09079 & 2.46311 \\ .10020 & -.11665 & -.24194 & .28841 & -1.24674 \\ -.01856 & .04096 & .13512 & -.14859 & .04175 \end{vmatrix} \times \begin{vmatrix} W1 \\ W2 \\ W3 \\ W4 \\ W5 \end{vmatrix} \quad (2b)
$$

In the known technique a log of the Th,U,K concentrations is derived by evaluating the relationship (2b) at each depth level in the borehole. Because of the nature of the logging process this estimate of Th,U,K concentrations tends to be noisy, but can be improved by some averaging of the radiation detected in the respective windows over successive borehole depth levels. For example, in order to find the Th,U,K concentrations at a given depth level $n$ in the borehole, the matrix M can be applied to the average of the radiation detected in the five windows for the depth level $n$ and the preceding one, $n-1$. The average need not be an arithmetic one, and more of the current depth level can be used than the preceding one. More than two depth levels can be averaged, but there is a limit because the consequence of averaging is a loss of resolution in the direction along the borehole axis.

In view of the known techniques discussed above, one aspect of the invention relates to improving the log of Th,U,K concentrations derived from the radiation measured in five energy windows, based on the recognition that the concentrations log can be filtered not in a fixed manner but adaptively—in accordance with changes with borehole depth in the detected radiation and an understanding of the nature of the logging process. More particularly, this aspect of the invention is based on the discovery that a technique which has at least some characteristic of Kalman filtering, can be used in connection with gamma radiation well logging when the nature of the logging is taken into account in accordance with this invention.

The invention is set out in Claim 1 and 12 respectively.

In particular, in accordance with an illustrative and nonlimiting example of the invention, the Th,U,K concentrations log is derived by estimating the concentrations for a given borehole depth level through modifying the concentrations estimate for a previous depth level by an amount determined through applying a filter (constructed for the given depth level) to a combination of: (i) the radiation detected in the five energy windows for the given depth level and (ii) an estimate for the radiation in the five energy windows derived by applying the tool sensitivity matrix to the concentrations estimate for a previous depth level. If the filtered estimate for the Th,U,K concentrations for the current depth level $n$ in the borehole is designated X(n) and the filtered estimate for a previous depth level is designated X(n−1), the filter gain for the given depth level is designated K(n), the radiation detected in the five energy windows for the depth level $n$ is designated W(n) and the sensitivity matrix characterizing the particular well logging tool is designated H, then one exemplary process in accordance with the invention can be described by the expression:

$$X(n)=X(n-1)+K(n)<W(n)-HX(n-1)> \qquad (3)$$

In a first, simpler and nonlimiting example of the invention, the filter gain K(n) for a particular borehole depth level $n$ is determined by the behaviour of the total detected gamma radiation in the vicinity of the depth level $n$. If the total detected gamma radiation is stable and smoothly varying in the relevant borehole depth interval, then in this example the effect of the adaptive filter gain K(n) approaches that of averaging the energy windows over a substantial depth borehole depth interval. However, if the total detected gamma radiation is changing significantly in the relevant borehole depth interval, then the gain K(n) approaches the 3×5 empirically derived matrix M discussed above. Stated differently, the filter adapts such that the previous Th,U,K concentrations estimate tends to dominate when the true concentrations at the relevant depth in the borehole are likely to be constant, and the newly measured energy windows tend to dominate otherwise. In a particular example, the gain K(n) can be the matrix M weighted by a scalar k(n) which varies between a value approaching zero and a value approaching unity.

3

In a second, more exacting but again nonlimiting example, the invention is implemented in a process which again applies a filter in the manner discussed in connection with expression (3) but the filter gain $K(n)$ for a given depth level $n$ is determined by a $3 \times 3$ matrix S characterizing the statistical variations in the filtered estimates of the Th,U,K concentrations, a $3 \times 3$ matrix Q characterizing the relevant geological noise, the well logging tool sensitivity matrix H, the matrix H transposed to produce a matrix H′, and a $5 \times 5$ matrix R characterizing the statistical variations in the radiation detected in the five windows. The manner in which said factors determine the filter gain $K(n)$ in this second exemplary embodiment of the invention can be described by:

$$K(n) = <S(n-1)+Q(n-1)>H'<H<S(n-1)+Q(n-1)>H'+R(n)>^{-1} \tag{4}$$

where S is an estimate of statistical variations in the Th,U,K concentration estimates, Q is an estimate of the relevant geological noise and R is an estimate of the statistical variations in the energy window measurements.

The log made up of samples $X(n)$ estimated through use of the filter gain referred to in connection with expression (4) can be further filtered, in a fixed-lag filter process which takes into account borehole depth levels subsequent to the one currently being processed.

Methods and apparatus in accordance with this invention will now be described, by way of example, with reference to the accompanying drawings, in which:

Figure 1 illustrates an exemplary embodiment of a system in accordance with the invention:

Figure 2 illustrates a characteristic spectra of thorium, uranium and potassium and the five energy windows of an exemplary logging tool;

Figure 3 is a flowchart illustrating a process in accordance with a first, simpler embodiment of the invention;

Figure 4 is a flowchart illustrating a process in accordance with a second, more exacting embodiment of the invention;

Figure 5 is a flowchart relating to the second embodiment of the invention;

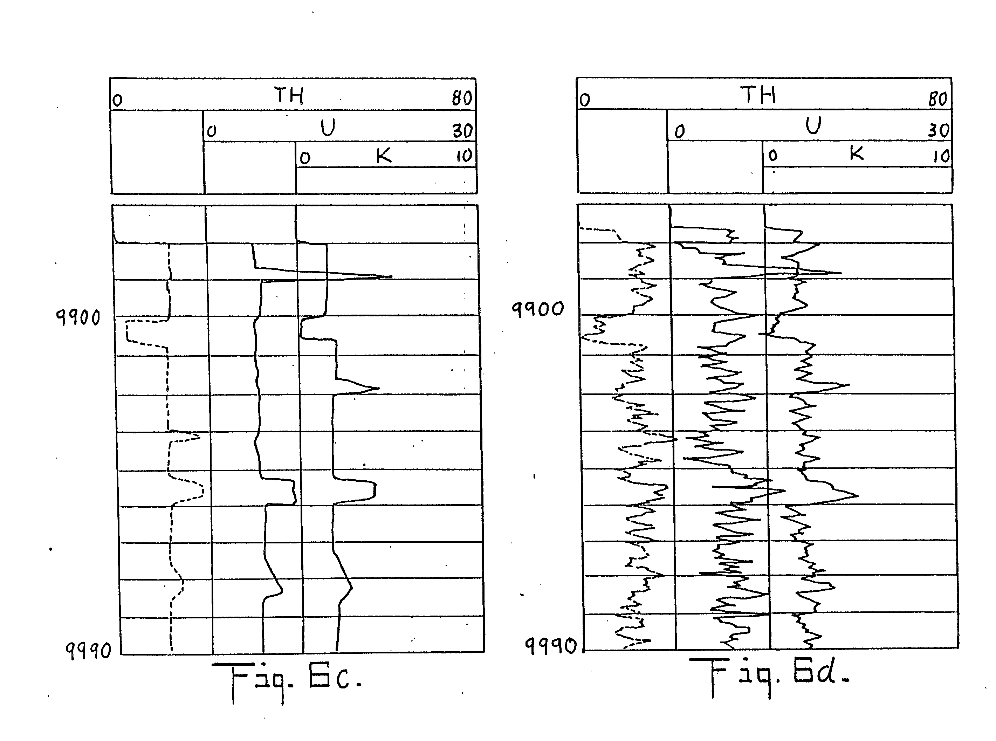

Figure 6a illustrates an assumed subsurface distribution of Th,U,K; Figure 6b illustrates a filtered Th,U,K log produced by a process in accordance with the first exemplary embodiment of the invention from an energy windows log produced by applying a tool sensitivity matrix to the Th,U,K distribution of Figure 6a and adding noise; Figure 6c illustrates a filtered Th,U,K log produced by a process in accordance with a second exemplary embodiment of the invention from the same energy windows log; and Figure 6d illustrates a Th,U,K log produced by a prior art process from the same energy windows log; and

Figures 7a and 7b illustrate filtered, Th,U,K logs produced in accordance with said first and second exemplary embodiments, respectively, from the same energy windows log derived in an actual borehole.

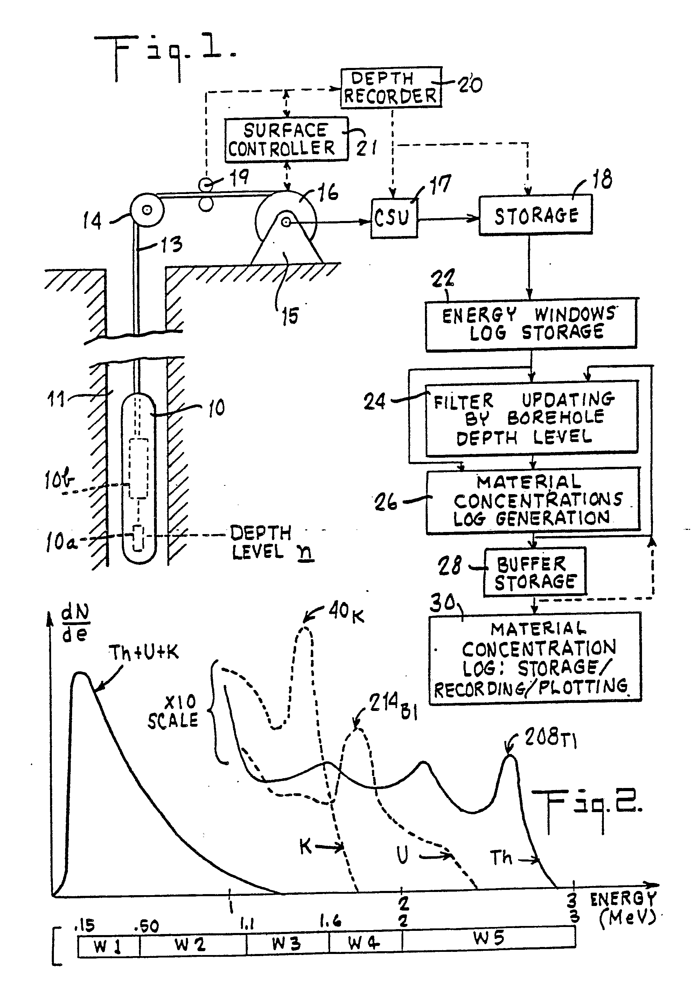

Figure 1 shows a logging tool 10 in a borehole 11 for investigating subsurface earth formations 12 by deriving a log thereof. In a particular embodiment, tool 10 logs the gamma radiation detected thereby in each of several energy windows, for example five. A particular example of such a tool is described in said U.S. Patent No. 3,976,878. Tool 10 is supported in borehole 11 by a cable 13 which passes over a sheave wheel 14 and is secured to a drum-and-winch mechanism 15. Mechanism 15 includes a suitable brush and slipring arrangement 16 for providing electrical connections between conductors within cable 13 and a unit 17 labelled CSU which controls the supply of power and electrical signals to and from tool 10 via cable 13 and reads signals from the tool for application to storage 18. Either or both of units 17 and 18 can include equipment for converting analogue signals received from tool 10 into digital signals associated with the respective depth levels $n$ in borehole 11 at which the analogue signals have been derived by tool 10, as indicated by wheel 19 which engages cable 13 and is linked with a depth recorder 20, which in turn is linked with either or both of units 17 and 18. Either or both of unit 17 and storage 18 can include additional equipment for preprocessing of logs to prepare them for use in the invented process. Unit 18 can store logs derived by separate measuring devices carried by the same tool 10 in one or more passes through borehole 11, logs derived from separate passes of different tools 10 through borehole 11, and/or logs derived from passes of tool 10 or other similar tools through different boreholes in the same or similar subsurface formations. A surface controller 21 controls the speed and position of tool 10 in borehole 11. The exemplary tool includes a scintillation detector schematically indicated at 10a which comprises a 305 mm (12-inch) long and 45 mm (1-3/4 inch) diameter sodium iodide crystal optically coupled to a photomultiplier, and includes electronic circuitry schematically illustrated at 10b which takes the photomultiplier output and determines the amount of gamma rays in each of five energy windows and sends corresponding electrical signals to the surface via conductors in cable 13.

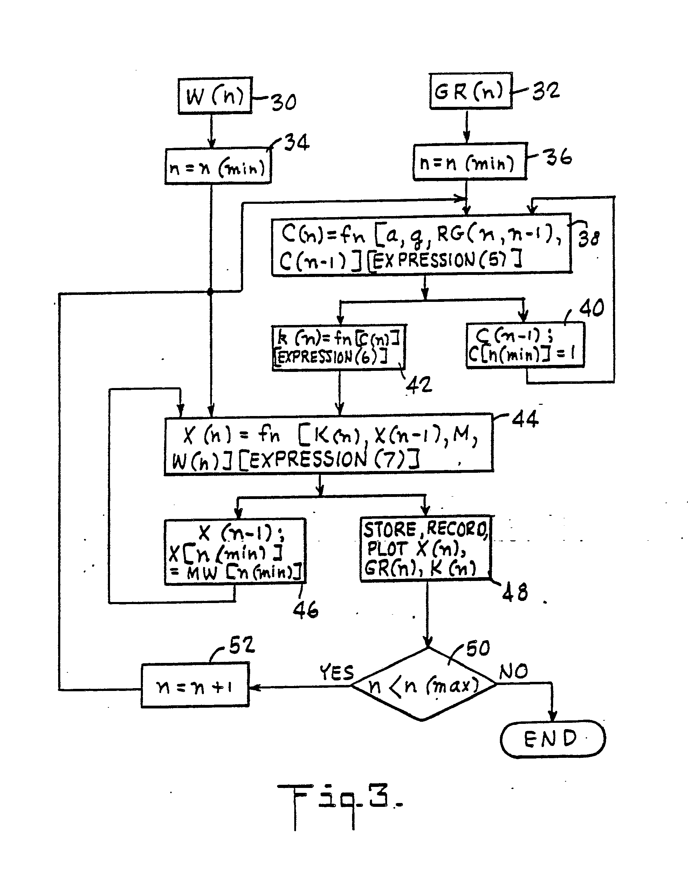

One example of the energy range in the energy windows is illustrated in Figure 2, where the five windows are designated W1, W2, W3, W4 and W5 and the MeV boundaries thereof are indicated. The vertical scale is the probability of emission of gamma ray photons, the leftmost curve indicates the spectrum of the total gamma radiation to which the tool is exposed and similarly the appropriately labelled three other curves indicate the potassium, uranium and thorium gamma rays to which the tool is exposed. Of course, Figure 2 is for an idealized setting and does not take into account factors such as interaction of the emitted gamma rays with the formation surrounding the borehole, the borehole itself and the logging tool, nor does it take into account factors such as the influence of adjacent borehole depth levels on the one of interest at the time.

Referring to Figure 1, the tool electronics indicated at 10b receive the output of the photomultiplier in the scintillation detector indicated at 10a and perform known pulse amplitude analysis to divide it into the five energy windows indicated in Figure 2. In principle, the output of the scintillation detector for the time interval corresponding to a short borehole depth interval, e.g. 152 mm (six inches), is accumulated in each of the five energy windows, and the result is an energy windows log sample or component for the depth level $n$ identifying the short depth interval. A sample or component of the energy windows log thus comprises five measurements, one for each respective one of the energy windows. Thus, sample W comprises measurements W1, W2, W3, W4, W5. The sequence of such measurements W, each for a respective successive borehole depth level, makes up the energy windows log. The sample or component of the energy windows log for a particular depth level $n$ in the borehole is designated W(n).

The energy windows log W for the borehole interval of interest is stored in storage 22, and is used in the remainder of Figure 1 for conversion into a log of selected gamma radiation emitting materials, such as thorium, uranium and potassium. The conversion can be in real time, in which case units 17, 18 and 22 can serve only as buffer storage, or it can be done by first storing the energy windows log for the entire borehole depth interval of interest, or for a part of it, in one or more of units 17, 18 and 22, and thereafter transmitting the log to another location for conversion into a materials log. A filter generated at unit 24 for the given borehole depth level is supplied to a unit 26, which also receives the energy windows log from unit 22 and generates from its inputs a log of the materials of interest, e.g. a Th,U,K concentrations log, a tangible representation of which can be temporarily stored in buffer storage 28 and more permanently in a unit 30. Unit 30 can include recording devices such as paper or film log recorders for producing log traces of the Th,U,K log. Filter updating unit 24 generates a respective filter for each depth level in the borehole on the basis of the energy windows log supplied to it from unit 22 and the material concentrations log generated in unit 26, and can additionally use previously generated materials log samples from buffer storage 28.

In a nonlimiting example of the first, simpler embodiment of the invention, the filter gain found in unit 24 for a given borehole depth $n$ is the matrix M discussed in connection with expressions (2a) and (2b) weighted by a scalar k(n) which varies between zero and unity and is determined for a given borehole depth level $n$ by the manner in which the total detected gamma radiation GR changes from one depth level to another in the vicinity of level $n$. The exact manner in which GR controls the filter in this example has been chosen on the basis of discoveries relating to the nature of the logging process, and an example which has been found to produce satisfactory results in practice is to base the weighting scalar k(n) for a particular depth level $n$ on a factor designated C(n), which in turn is based on the following relationship between total gamma radiation GR(n) detected at depth level $n$, total gamma radiation GR(n−1) detected at the preceding depth level $n-1$, the factor C(n−1) found for the preceding depth level $n-1$, and the constants $a$ and $g$:

$$C(n)=ag<GR(n)-GR(n-1)>/<GR(n)+GR(n-1)>+(1-a)<C(n-1)> \qquad (5)$$

In this example, $a$ can take one of two possible values: 0.8 if C(n) is more than C(n−1), and .125 otherwise, and $g$ can be 3. To start the process, when n=1, and there is no n−1 level, C(n) can be set to one.

The weighting scalar k(n) can then be set as follows.

$$
\begin{aligned}
k(n)&=C(n) && \text{if } .05<=C(n)<=.06 \\
k(n)&=.05 && \text{if } \quad C(n)<.05 \qquad (6) \\
k(n)&=.6 && \text{if } \quad C(n)>.6
\end{aligned}
$$

In this example of the first, simplified embodiment of the invention, in which K(n)=k(n)M and the product of the matrices M and H is unity, the filtering described in connection with expression (3) above can now be characterized by:

$$X(n)=<1-k(n)>X(n-1)+k(n)MW(n) \qquad (7)$$

It should be appreciated from the discussion in connection with expressions (5), (6) and (7) that at one extreme, when the total detected gamma radiation is stable or changes very slowly in the vicinity of the depth level of interest and thereby indicates a homogeneous zone in the borehole, the weighting scalar k(n) is at its low value of 0.05 and the new filtered estimate of the Th,U,K concentrations is based almost entirely on the filtered estimate for the previous borehole depth level. At the other extreme, when the total detected gamma radiation is changing rapidly in the vicinity of the borehole depth level of interest at the time, the weighting scalar k(n) is at its high value of 0.6 and the previous filtered estimate for the Th,U,K concentrations is de-emphasized in favour of the estimate based entirely on the current measurements of radiation in the five energy windows. In the intermediate range, the balance between the relative weights accorded to the previous filtered estimate of the Th,U,K concentrations and the radiation detected in the five energy windows shifts in favour of the latter with increasing change in the total detected gamma radiation in the vicinity of the borehole depth level of interest.

**0 072 304**

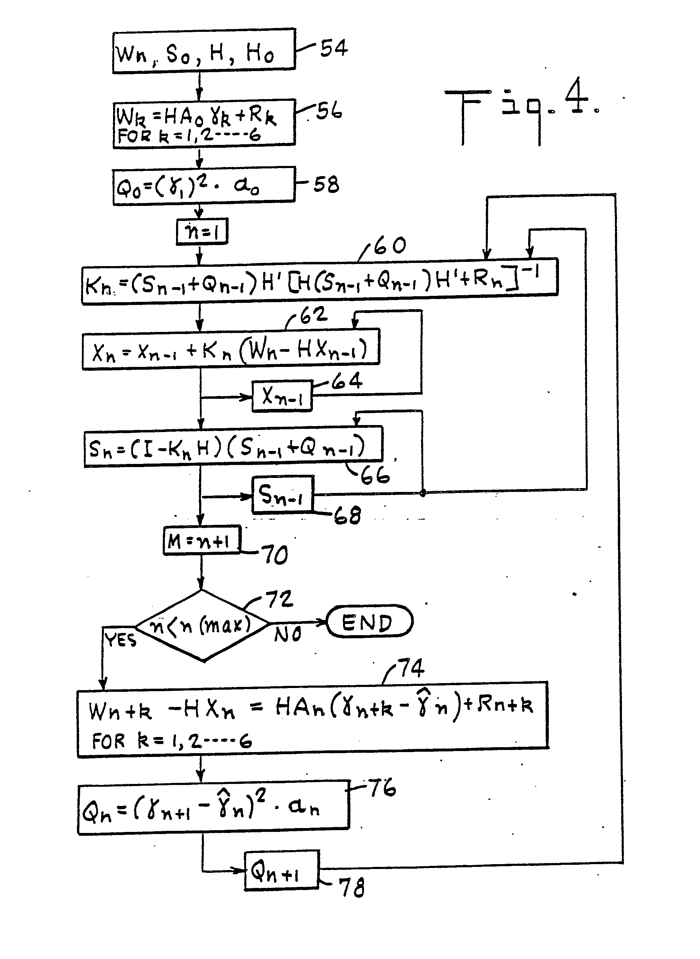

An exemplary process embodying the above example of the first, simpler embodiment of the invention is illustrated in Figure 3, and commences with steps 30 and 32 which sequentially provide the depth level samples of the five windows log samples W(n) and the total detected gamma radiation log samples GR(n), respectively. At step 34 a pointer $n$ is set to the depth level of the bottom end of the borehole depth interval of interest, so as to start the process with the appropriate sample of the W(n) log, and at step 36 the depth index is set to the same level to extract the appropriate sample of the GR(n) log. At step 38 the process finds the current value of the factor C(n), in accordance with the procedure discussed in connection with expression (5) above, using as an input the sample of the GR(n) log pointed to by the current value of $n$ and using, in this case, a value of one for the factor C(n−1). The factor C(n) output from step 38 is stored in step 40 as the factor C(n−1) to be supplied back to step 38 for use in producing the next factor C(n). It is also supplied to step 42, where the weighting scalar k(n) is generated in accordance with the process discussed in connection with expression (6) above. The output of step 42 is supplied to step 44, which also receives the sample of the W(n) log pointed to by the current pointer $n$, and produces a filtered estimate of the Th,U,K concentrations for the depth level $n$ in accordance with the process discussed in connection with expression (7) above. For this first run through step 44, the process uses for X(n−1) an estimate for the Th,U,K concentrations for the depth level n(min) which is derived by applying the matrix M to the windows log sample for the depth level n(min). The output of step 44 is the filtered estimate for the Th,U,K concentrations for depth level $n$, and it is stored in step 46 for use in the next run through step 44, and also is stored, recorded and/or plotted in step 48, which can also receive and store, record and/or plot the estimates of the total detected gamma radiation GR(n), which can be simply the sums of the five windows of the W(n) log, and the weighting scalar k(n). A test is made at step 50 to determine if the current depth level $n$ is within the borehole depth interval of interest and, if that is the case, the index $n$ is incremented at step 52, and the process returns to steps 44 and 38. Of course this time in step 38 the factor C(n−1) provided by step 40 to step 38 is the previous output of step 38 and, similarly, the previous filtered estimate X(n−1) which step 46 supplies to step 44 this time is the previous filtered estimate provided to step 46 by step 44. When step 50 indicates that the top of the borehole depth interval of interest has been reached, the process ends.

In a nonlimiting example of the second, more exacting embodiment of the invention, the filtering is again through the process discussed in connection with expression (3) above, but the filter for a particular depth level is derived through the more complex process discussed in connection with expression (4) above, the filter is different depending on whether the current depth level of interest is found to be in a homogeneous or a transition zone in the borehole, and the filtered X(n) estimates can be further filtered by fixed-lag smoothing.

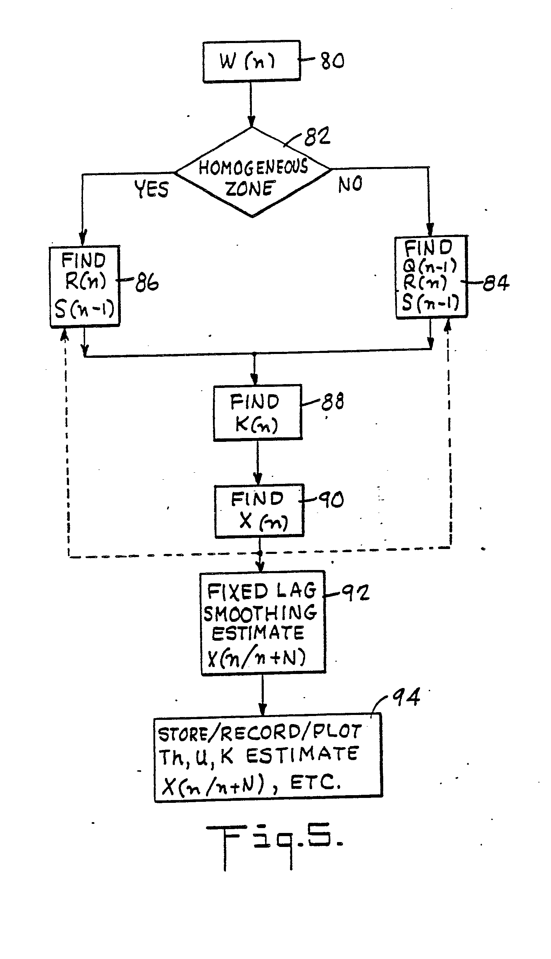

An exemplary process in accordance with this second embodiment of the invention is illustrated in flow-chart form in Figure 4, and commences at step 54 which sequentially provides the five energy windows log W(n), starting with the sample for the lowermost depth level n=1 for the borehole interval of interest. Step 54 further provides a starting value S(O) for the 3×3 matrix S, a sensitivity matrix H and starting values for the estimate X(O) for the filtered Th,U,K concentrations at depth level zero. Said starting values can be as follows:

$$S(O) = \begin{vmatrix} 10^4 & 0 & 0 \\ 0 & 10^4 & 0 \\ 0 & 0 & 10^4 \end{vmatrix}$$

$$X(O) = \begin{vmatrix} 0 \\ 0 \\ 0 \end{vmatrix}$$

At step 56 a vector A(O) is evaluated by a least-squares fit according to the relationship:

$$W(k) = HA(O)GR(k) + R(k) \text{ for } k=1, 2,..., 6 \tag{8}$$

where A(O) is a vector of the form:

$$\begin{vmatrix} A1 \\ A2 \\ A3 \end{vmatrix}$$

W(k) designates the five-windows log samples for depth levels one through six, GR(k) designates the total

.6

detected gamma radiation for depth levels one through six and R(k) designates an estimate of statistical variations in W(k) for depth levels one through six and is defined, for a given depth level $n$, by:

$$R= \begin{vmatrix} (W1)/2 & 0 & 0 & 0 & 0 \\ 0 & (W2)/2 & 0 & 0 & 0 \\ 0 & 0 & (W3)/2 & 0 & 0 \\ 0 & 0 & 0 & (W4)/2 & 0 \\ 0 & 0 & 0 & 0 & (W5)/2 \end{vmatrix} \quad (9)$$

where W1, W2, etc. are the measurements in the respective energy windows for the relevant depth level.

At step 58 in Figure 4, the estimate Q(0) of the relevant geological noises found is a function of the total detected gamma radiation GR(1) for depth level one and the elements of the vector A(0) found at step 56, in accordance with the relationship:

$$Q(0)=<GR(1)>^2 \begin{vmatrix} A1^2 & 0 & 0 \\ 0 & A2^2 & 0 \\ 0 & 0 & A3^2 \end{vmatrix}_{(0)} \quad (10)$$

where the elements A1, A2 and A3 in the right-hand matrix, a(0), are those of the vector A(0). At step 60 the adaptive filter K(n) is found for the current depth level of interest as a function of the matrices S and Q for the previous depth level, the matrix R for the current depth level and the logging tool sensitivity matrix H and its transpose H', in accordance with the relationship discussed in connection with expression (4) above. For the first run through step 60, when n=1, the matrix S is the starting value provided from step 54, the matrix Q is provided by step 58 and the matrix R is derived as discussed in connection with expression (9) from the windows log sample for depth level one. At step 62 a filtered estimate X(n) is derived for the Th,U,K concentrations at the current depth level $n$ as a function of the filtered estimate X(n−1) at the previous depth level, the adaptive filter gain K(n) found at step 60 for the same level $n$, the windows log sample W(n) for the same depth level and the logging tool sensitivity matrix H, through a process of the type discussed in connection with expression (3) above. For the first run through step 62, when n=1, the filtered estimate for X(0) drops out and X(n) is a function only of K(n) and W(n). The X(n) estimate from step 62 is stored at 64, for use as the X(n−1) filtered estimate in the next run through step 62, and at step 66 an estimate is derived of the matrix S(n) as a function of the identity matrix I, the filter gain K(n) found at step 60, the logging tool sensitivity matrix H and the estimates for the matrices S and Q found for the previous depth level $n−1$, the relationship therebetween being:

$$S(n)=<I−K(n)H><S(n−1)+Q(n−1)> \quad (11)$$

For the first run through step 66, where n=1, the estimate for the matrix S for the previous depth level is provided from step 54 and the estimate for the matrix Q for the previous depth level is provided from step 58. At step 68 the output of step 66 is stored as the estimate S(n−1) for use in the next run through steps 60 and 66, and the process is now initialized to run sequentially through the remainder of the depth levels in the borehole depth interval of interest. The depth level index $n$ is therefore incremented at step 70 and, if a test at step 72 determines that the new depth level is still within the borehole depth interval of interest, step 74 finds the vector A(n) by evaluating the following relationship 12 for the vector A(n) by a least-squares fit method at the current value of the depth level index $n$ and each of the values one through six for the index $k$:

$$W(n+k)−HX(n)=HA(n)<GR(n+k)−\hat{GR}(n)>+R(n+k) \text{ for } k=1, 2,..., 6 \quad (12)$$

where $\hat{GR}(n)$ is the sum of the components of W(n)=HX(n). At step 76 the matrix Q(n) is found for the current depth level $n$ as a function of the elements of the vector A(n) found at step 74 and the difference between the total detected gamma radiation at depth levels $n$ and $n+1$ in accordance with the relationship:

$$Q(n)=<GR(n+1)−\hat{GR}(n)>^2 \begin{vmatrix} A1^2 & 0 & 0 \\ 0 & A2^2 & 0 \\ 0 & 0 & A3^2 \end{vmatrix}_{(n)} \quad (13)$$

7

where A1, A2, A3 in the right-hand matrix a(n) are the elements of the vector A(n), and the output of step 76 is stored at step 78 as the matrix Q(n−1) to be used in the next evaluation in step 60. The process then starts again at step 60 and cycles until the test at step 72 determines that the top end of the borehole depth interval of interest has been reached, at which time the process can end.

In accordance with the invention the materials log samples X(n) can be further improved by fixed lag filtering in which the estimate X(n) for the concentrations Th,U,K at a given level $n$ in the borehole becomes a further filtered sample X(n/n+N) which is determined by the sample X(n) and the samples X(n) for the next several feet (3.3 feet=1 m) of the borehole, e.g., for the next ten feet when samples are taken every six inches and N is 20. The relationship between a further filtered sample X(n/n+N) and the factors which determine it can be represented as:

$$X(n/n+N)=X(n)+<S(n-1)+Q(n-1)>\left( \sum_{k=1}^{N} \prod_{j=0}^{k-1} <I-K(n+j)H>'E(n+k) \right) \qquad (14)$$

where N equals 20 has been found to produce satisfactory results in practicing one example of this aspect of the invention and where the quantity E(n+k) is evaluated for each required depth level $n$ in accordance with:

$$E(n)=H'<HS(n)H'+R(n)><W(n)-HX(n-1)> \qquad (15)$$

In the further filtering process described in connection with expressions (14) and (15) above, the filtered sample X(n) is produced through a process such as at step 62 in Figure 4, the matrix S(n) is produced as in step 66 in Figure 4, I is the identity matrix, K(n+j) is produced for a given depth level $n$ in accordance with a process as in step 60 in Figure 4, H is the logging tool sensitivity matrix and H' is its transpose, W(n) are the energy windows measurements for the depth level $n$, e.g. from step 54 in Figure 4, R(n) is the noise estimate produced by a process as discussed in connection with expression (9) above and X(n−1) is the filtered Th,U,K estimate for the depth level previous to depth level $n$.

The process described in connection with Figure 4 can be simplified where the estimate X(n) being evaluated is for a depth level which happens to be in a homogeneous portion of the borehole, in which the concentrations Th,U,K are stable or do not change rapidly. In a homogeneous zone it can be expected that the geological noise Q(n) estimated in steps 74 and 76 in Figure 4 is very low. Indeed, it has been found that the invented process produces satisfactory results when Q(n) is set close to zero in homogeneous portions of the borehole. Therefore, in accordance with another aspect of the invention a test is made first to determine if the depth level of interest is likely to be in a homogeneous zone or in a transient zone, and subsequent processing as described in Figure 4 uses Q(n) close to 0 for all levels within a homogeneous zone and otherwise derives Q(n) as discussed in connection with steps 74 and 76. A test to determine whether a depth level is in a homogeneous or in a transient zone, which has been found to produce satisfactory results in practicing this invention, is to check the manner in which the total detected gamma radiation GR changes in the vicinity of the depth level $n$ of interest. For example, a depth level $n$ can be considered to be in a homogeneous zone if each of the following inequalities 16 is satisfied, where T1 is a threshold, e.g. 13, and T2 is another threshold, e.g. 4:

$$\sum_{k=0}^{5} <GR(n+k)-GR(n-1)>^2/<GR(n+k)><T1 \qquad (16)$$

$$<GR(n)-GR(n-1)>^2/GR(n)<T2$$

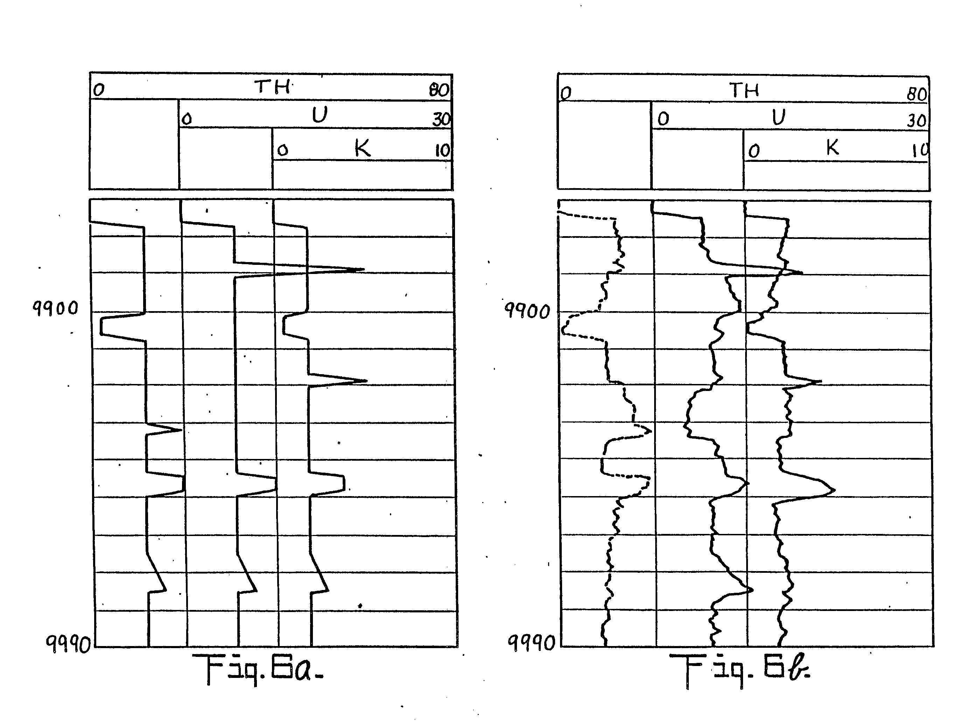

The overall process using the second, more exacting embodiment of the invention, is illustrated in Figure 5, and commences with step 80 which provides sequentially the energy windows log samples W(n). Step 82 determines whether the current depth level $n$ is in a homogeneous zone, by a test such as discussed in connection with expression (16) above. If the current depth level is not in a homogeneous zone, but in a transient one, step 84 finds the matrices Q(n−1), R(n) and S(n−1) in the manner discussed in connection with Figure 4. If the current depth level is in a homogeneous zone, step 86 finds the matrices R(n) and S(n−1) as discussed in connection with Figure 4, but assuming that the geological noise matrix Q(n−1) is close to zero. The results of steps 84 and 86 are supplied to step 88, where the adaptive filter gain K(n) for the current depth level is found in the manner discussed in connection with Figure 4 and at step 90 the filter is applied as discussed in connection with Figure 4 to produce the filtered estimate X(n) for the current depth level, which is supplied to steps 84 and 86 to be used therein to find the next set of matrices. Fixed-lag smoothing estimates are produced in step 92, in a process as discussed in connection with expressions (14) and (15), and at step 94 the process results are stored, recorded and/or plotted, e.g. by producing a tangible representation of the Th,U,K concentrations on the basis of the further filtered estimates X(n/n+N) and/or other process results such as the estimates log X(n), etc.

For test purposes, the exemplary embodiment of the invention was applied both to energy windows logs derived from assumed subsurface distributions of thorium, uranium and potassium and to energy windows logs derived in actual boreholes. As an example, Figure 6 illustrates an assumed subsurface distribution of Th,U,K, where the vertical dimension is depth in the borehole in feet and the horizontal scales of Th and U are in parts per million while that of K is in percent. An energy windows log was derived from the Th,U,K distributions of Figure 6a by applying thereto a logging tool sensitivity matrix H in accordance with the relationship W=HX and adding noise to simulate actual logging conditions. The Th,U,K log of Figure 6b is the end result of applying the first exemplary embodiment of the invention to said simulated energy windows log and the Th,U,K log of Figure 6c is the result of applying the second exemplary embodiment to the same simulated energy windows log. For comparison with known prior art, Figure 6d illustrates a Th,U,K log derived from the same simulated energy windows log in accordance with the prior art relationship X=MW and using a prior art four-second RC filter.

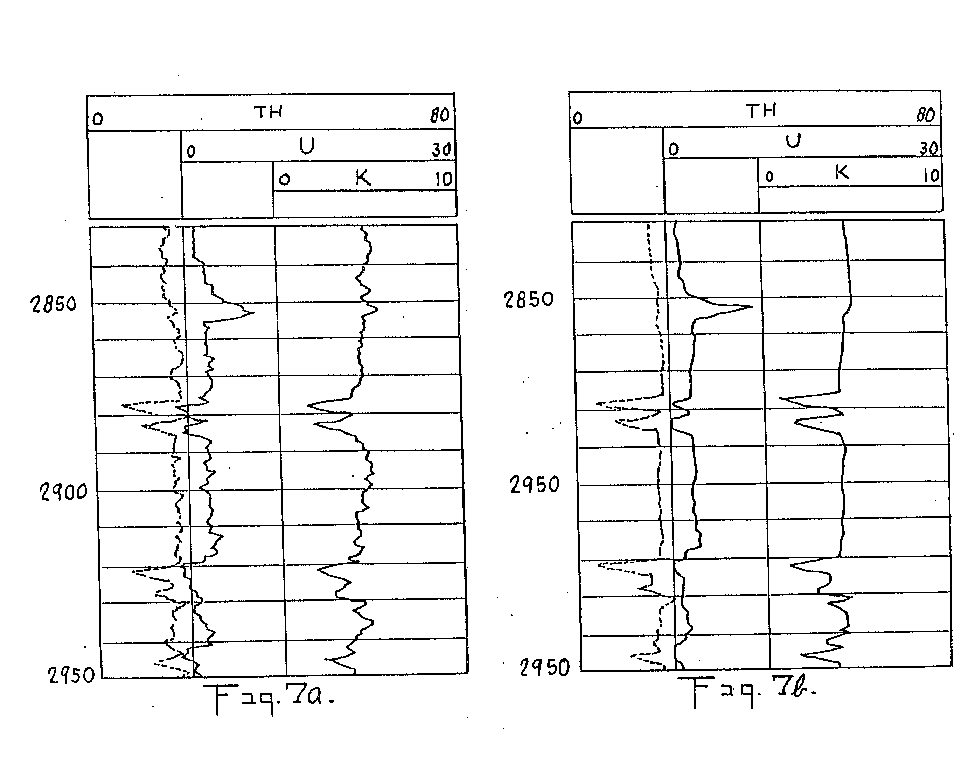

When the exemplary embodiments of the invention are applied to an energy windows log derived in an actual borehole, results such as those illustrated in Figures 7a and 7b are produced. The Th,U,K log in Figure 7a is the result of using the first exemplary embodiment of the invention discussed above and that of Figure 7b is the result of using the second exemplary embodiment.

Both the process illustrated in Figure 3 and that illustrated in Figures 4 and 5 can be computer-implemented by arranging and programming a general purpose digital computer of a suitable size and configuration, such as a commercially available machine under the designation VAX10, to carry out the steps discussed above. In the alternative, the illustrated processes can be implemented by means of a special purpose hardwired and/or firm-wired machine carrying out the discussed steps. Both the process of Figure 3 and that of Figures 4 and 5 can be carried out substantially in real time. It is clear that the process of Figure 3 is simpler and requires less processing time and equipment than that of Figures 4 and 5. On the other hand, it is believed that the process of Figures 4 and 5 produces superior results. Accordingly, both are preferred embodiments of the invention, and which one is chosen for a particular implementation depends on whether minimizing processing speed and equipment needs is preferable to optimizing perceived quality of results in a given set of circumstances.

The estimate of the matrix A produced in step 74, which is a measure of the geological noise which influences the end result of the invented process, can integrate important geological knowledge about the variation in the real concentrations of Th,U,K with borehole depth. For example, the matrix A for a particular borehole depth level should always be such that each of the Th,U,K estimates remains positive. An additional item of geological knowledge for use in the invented process is that the Th,U,K logs are usually not anti-correlated. Yet additional items of geological information which are less important than the two discussed above but are still helpful include the requirement that the relative contributions of Th, U and K in the production of total detected gamma radiation are continuous functions of borehole depth, that the sequence of ratios Th/K usually presents a continuity pattern and that the two additional ratios Th/U and U/K can present continuity patterns, e.g. in the case of the same shale interrupted by non-radioactive sandstone beds (or in the case of washouts). As another improvement, the tool sensitivity matrix H discussed in connection with the process of Figures 4 and 5 need not be the same for each depth level but can vary to account for geological knowledge of the borehole and the formations surrounding it at a given depth level so as to bring the Th,U,K estimates produced by the invented process yet closer to the probable true distributions of Th,U,K in the subsurface formations.

Thus, in accordance with the invention a log such as W(n) is derived of gamma radiation detected in selected energy windows by a logging tool, such as 10, passed through a selected borehole depth interval which extends through subsurface earth formations, and this energy windows log is converted into a log, such as X(n), of selected subsurface gamma radiation emitting materials such as Th,U,K. The materials log is filtered by an adaptive filter, such as one discussed in connection with K(n), which is allowed to vary with borehole depth in accordance with selected changes with depth in detected gamma radiation and in a manner consistent with geological constraints. One nonlimiting example of such an adaptive filter was discussed in connection with Figure 3 and varies with changes with depth in the total detected gamma radiation and in a manner consistent with geological constraints as reflected in the choice of the filter characteristics, e.g. the choice of the filter gain K(n) characteristics, including the parameters on which the component C(n) is based and the manner in which previous estimates of Th,U,K are used in determining the current one of interest. In another nonlimiting example the filter is allowed to vary as discussed in connection with Figures 4, and 5 by taking into account an estimate, such as R(n), of the statistical variations in the windows log measurements, an estimate such as Q(n) of the geological noise and an estimate such as S(n) of the fluctuations in estimates of the materials log for previous borehole depth intervals. Moreover, the latter example of filtering is also consistent with geological constraints, as reflected in the manner in which the estimates of statistical variations in the windows log measurements, geological noise and previous Th,U,K estimates are derived and as reflected in the manner in which previous filtered estimates of the Th,U,K log are used. Moreover, in the second example of a filter, a further filtering based on a fixed lag, e.g. as discussed in connection with expressions (14) and (15), can be used to further improve the materials log. A tangible representation of the filtered or further-filtered log of the subsurface materials is produced, and one nonlimiting example thereof is discussed in connection with Figures 6a—7b.

# 0 072 304

**Claims**

1. A well logging method comprising:

deriving a log of gamma ray radiation detected in selected energy windows by a logging tool passed through a selected borehole depth interval which extends through subsurface earth formations;

converting the energy windows log into a log of selected subsurface gamma radiation emitting materials through a process comprising the use of a filter in order to produce a filtered log of said materials; and

producing a tangible representation of the filtered log of said materials, characterised in that said filter is adaptive and is allowed to vary with borehole depth in accordance with the way in which detected gamma ray changes with depth in the borehole.

2. A well logging method as in claim 1 characterised in that said filter for a given borehole depth level is determined by changes in the total detected gamma radiation as between depth levels in the vicinity of said given depth level.

3. A well logging method as in claim 2 characterised in that said filter for a given borehole depth level is determined by changes in total detected gamma radiation between the given depth level and the depth level preceding said given depth level.

4. A well logging method as in claim 2 characterised in that a sample of the materials log for a given borehole depth level is produced through modifying the sample for the preceding depth level by a filtered contribution of the difference between a windows log sample for the given depth level and a windows log sample produced from the materials log sample for the preceding depth level and known logging tool characteristics.

5. A well logging method as in any one of claims 1 through 4 characterised in that the deriving step comprises deriving a log of gamma radiation detected in five respective energy windows and the converting step comprises converting the energy windows log into a log of the concentration of each of thorium, uranium and potassium along the selected borehole depth interval.

6. A well logging method as in claim 1 characterised in that the filter for a given depth in the borehole is a function of an estimate of the statistical variations in the windows log measurements in the vicinity of the given depth level and of an estimate of the geological noise in the vicinity of the given depth level.

7. A well logging method as in claim 6 characterised in that said filter for a given depth level in the borehole is a function of an estimate of fluctuations in estimates of said materials log for previous borehole depth levels.

8. A well logging method as in claim 1, 6 or 7, characterised in that the filtered log of said selected subsurface materials is further subjected to selected fixed lag filtering to thereby produce a further-filtered log of said selected subsurface materials.

9. A well logging method as in claim 1, 6 or 7 including determining whether a given borehole depth level is in a homogeneous zone or in a transition zone and changing the nature of the filter for said depth level accordingly.

10. A well logging method as in claim 1 characterised in that the filter determining an estimate of the log of said subsurface materials for a given depth level in the borehole is structured to accord greater weight to the estimate for the previous depth level with lesser change in the total detected gamma radiation in the vicinity of the given borehole depth level and otherwise to accord greater weight to the windows log for the given depth level.

11. A well logging method as in claim 1 characterised in that the deriving step comprises passing said logging tool through said selected borehole interval.

12. A well logging system comprising:

means for deriving a log of gamma ray radiation detected in selected energy windows by a logging tool passed through a selected borehole depth interval which extends through subsurface earth formations;

means for converting the energy windows log into a log of selected subsurface gamma radiation emitting materials through a process comprising the use of a filter in order to produce a filtered log of said materials, said filter being implemented through a programmed digital computer or a hardwired machine; and

means for producing a tangible representation of the filtered log of said materials, characterised in that said filter is adaptive and is allowed to vary with borehole depth in accordance with the way in which detected gamma ray changes with depth in the borehole.

**Patentansprüche**

1. Ein Bohrlochuntersuchungsverfahren, umfassend:

Ableiten eines Logs von Gamma-Strahlung, erfaßt in ausgewählten Energiefenstern mittels eines Untersuchungsgeräts, das durch ein ausgewähltes Bohrlochtiefenintervall geführt wird, welches sich durch unterirdische Erdformationen erstreckt;

Umsetzen des Energiefensterlogs in ein Log von ausgewählten unterirdischen Gamma-Strahlung

10

imitierenden Materialien durch einen Prozeß, umfassend die Verwendung eines Filters, um ein gefiltertes Log der genannten Materialien zu erzeugen und

Erzeugen einer greifbaren Repräsentation des gefilterten Logs der genannten Materialien, dadurch gekennzeichnet, daß das Filter adaptiv ist und die Möglichkeit besitzt, sich mit der Bohrlochtiefe in Übereinstimmung mit der Art und Weise zu ändern, in welcher die erfaßten Gamma-Strahlen sich mit der Tiefe in dem Bohrloch verändern.

2. Bohrlochuntersuchungsverfahren nach Anspruch 1, dadurch gekennzeichnet, daß das genannte Filter für einen gegebenen Bohrlochtiefenpegel bestimmt wird durch Veränderungen in der gesamten erfaßten Gamma-Strahlung wie zwischen Tiefenpegeln in der Nähe des genannten gegebenen Tiefenpegels.

3. Bohrlochuntersuchungsverfahren nach Anspruch 2, dadurch gekennzeichnet, daß das genannte Filter für einen gegebenen Bohrlochtiefenpegel bestimmt wird durch Veränderungen in der gesamten erfaßten Gamma-Strahlung zwischen dem gegebenen Tiefenpegel und dem dem genannten gegeben Tiefenpegel vorangehenden Tiefenpegel.

4. Bohrlochuntersuchungsverfahren nach Anspruch 2, dadurch gekennzeichnet, daß ein Abtastwert des Materialienlogs für einen gegebenen Bohrlochtiefenpegel erzeugt wird durch Modifizieren des Abtastmusters für den vorhergehenden Tiefenpegel mittels eines gefilterten Anteils der Differenz zwischen einem Fensterlogabtastmuster für den gegebenen Tiefenpegel und einem Fensterlogabtastmuster, erzeugt von dem Materialienlogabtastmuster für den vorhergehenden Tiefenpegel und bekannten Untersuchungsgerätkennwerten.

5. Bohrlochuntersuchungsverfahren nach einem der Ansprüche von 1 bis 4, dadurch gekennzeichnet, daß der Ableitungsschritt das Ableiten eines Logs von Gamma-Strahlung umfaßt, erfaßt in fünf jeweiligen Energiefenstern und der Umsetzschritt das Umsetzen der Energiefensterlogs in ein Log der Konzentrationen jeweils von Thorium, Uran und Kalium längs des ausgewählten Bohrlochtiefenintervalls umfaßt.

6. Bohrlochuntersuchungsverfahren nach Anspruch 1, dadurch gekennzeichnet, daß das Filter für einen gegebenen Tiefenpegel in dem Bohrloch eine Funktion einer Abschätzung der statistischen Veränderungen in den Fensterlogmessungen in der Nähe des gegebenen Tiefenpegels und einer Abschätzung des geologischen Rauschens in der Nähe des gegebenen Tiefenpegels ist.

7. Bohrlochuntersuchungsverfahren nach Anspruch 6, dadurch gekennzeichnet, daß das Filter für einen gegebenen Tiefenpegel in dem Bohrloch eine Funktion einer Abschätzung der Fluktuationen in den Abschätzungen des genannten Materialienlogs für vorhergehende Bohrlochtiefenpegel ist.

8. Bohrlochuntersuchungsverfahren nach einem der Ansprüche 1, 6 oder 7, dadurch gekennzeichnet, daß das gefilterte Log der genannten ausgewählten unterirdischen Materialien ferner einer ausgewählten festliegenden Verschiebungsfilterung unterworfen wird, um dadurch ein weiterhin gefiltertes Log der genannten ausgewählten unterirdischen Materialien zu erzeugen.

9. Bohrlochuntersuchungsverfahren nach einem der Ansprüche 1, 6 oder 7, umfassend die Bestimmung, ob ein gegebener Bohrlochtiefenpegel sich in einer homogenen Zone oder in einer Übergangszone befindet und entsprechende Änderung der Natur des Filters für den genannten Tiefenpegel.

10. Bohrlochuntersuchungsverfahren nach Anspruch 1, dadurch gekennzeichnet, daß das Filter, das eine Abschätzung des Logs der genannten unterirdischen Materialien für einen gegebenen Tiefenpegel in dem Bohrloch festlegt, so aufgebaut ist, daß es der Abschätzung für den vorhergehenden Tiefenpegel eine größere Wichtung mit geringerer Änderung in der gesamten erfaßten Gamma-Strahlung in der Nähe des gegebenen Bohrlochtiefenpegels zuordnet und im übrigen eine größere Wichtung dem Fensterlog für den gegebenen Tiefenpegel zuordnet.

11. Bohrlochuntersuchungsverfahren nach Anspruch 1, dadurch gekennzeichnet, daß der Ableitungsschritt das Führen des genannten Untersuchungsgeräts durch das genannte ausgewählte Bohrlochintervall umfaßt.

12. Ein Bohrlochuntersuchungssystem, umfassend:

Mittel zum Ableiten eines Logs von Gamma-Strahlung, erfaßt in ausgewählten Energiefenstern mittels eines Untersuchungsgeräts, das durch ein ausgewähltes Bohrlochtiefenintervall geführt wird, welches sich durch unterirdische Erdformationen erstreckt;

Mittel für das Umsetzen des Energiefensterlogs in ein Log von ausgewählten unterirdischen Gamma-Strahlung imitierenden Materialien durch einen Prozeß, umfassend die Verwendung eines Filters, um ein gefiltertes Log der genannten Materialien zu erzeugen, wobei das Filter durch einen programmierten digitalen Rechner oder eine festverdrahtete Apparatur realisiert ist, und

Mittel für die Erzeugung einer faßbaren Repräsentation des gefilterten Logs des genannten Materials, dadurch gekennzeichnet, daß das Filter adaptiv ist und die Möglichkeit hat, sich mit der Bohrlochtiefe in Übereinstimmung mit der Art und Weise zu ändern, in der erfaßte Gamma-Strahlung sich mit der Tiefe in dem Bohrloch verändert.

**Revendications**

1. Procédé de diagraphie comprenant:

l'établissement d'une diagraphie du rayonnement gamma détecté dans des fenêtres choisies d'énergie par un outil de diagraphie auquel on fait parcourir un intervalle choisi de profondeur du forage qui traverse des formations souterraines, la transformation de cette diagraphie de fenêtres d'énergie en une diagraphie de substances souterraines émettrices de rayonnement gamma choisies, par un processus comprenant l'utilisation d'un filtre pour la production d'une diagraphie filtrée de ces substances, et

la production d'une représentation tangible de la diagraphie filtrée desdites substances,

caractérisé par le fait que le filtre est adaptatif et peut varier avec la profondeur dans le forage en fonction de la manière dont le rayonnement gamma détecté varie avec cette profondeur.

2. Procédé de diagraphie selon la revendication 1, caractérisé par le fait que le filtre relatif à un niveau de profondeur donné du forage est déterminé par les variations du rayonnement gamma total détecté entre des niveaux de profondeur voisins dudit niveau de profondeur donné.

3. Procédé de diagraphie selon la revendication 2, caractérisé par le fait que le filtre relatif à un niveau de profondeur donné du forage est déterminé par les variations du rayonnement gamma total détecté entre le niveau de profondeur donné et le niveau de profondeur précédant celui-ci.

4. Procédé de diagraphie selon la revendication 2, caractérisé par le fait qu'un échantillon de la diagraphie de substances relatif à un niveau de profondeur donné du forage est produit en modifiant l'échantillon relatif au niveau de profondeur précédent par une contribution filtrée de la différence entre un échantillon de la diagraphie de fenêtres relatif au niveau de profondeur donné et un échantillon de la diagraphie de fenêtres produit à partir de l'échantillon de la diagraphie de substances relatif au niveau de profondeur précédent, et des caractéristiques connues de l'outil de diagraphie.

5. Procédé de diagraphie selon l'une des revendications 1 à 4, caractérisé par le fait que la phase d'établissement comprend l'établissement d'une diagraphie du rayonnement gamma détecté dans cinq fenêtres d'énergie et la phase de transformation comprend la transformation de la diagraphie de fenêtres d'énergie en une diagraphie de concentrations de thorium, d'uranium et de potassium le long de l'intervalle de profondeur choisi du forage.

6. Procédé de diagraphie selon la revendication 1, caractérisé par le fait que le filtre relatif à un niveau de profondeur donné dans le forage est fonction d'une estimation des variations statistiques des mesures de la diagraphie de fenêtres d'énergie à proximité du niveau de profondeur donné et d'une estimation du bruit géologique à proximité de ce même niveau.

7. Procédé de diagraphie selon la revendication 6, caractérisé par le fait que le filtre relatif à un niveau de profondeur donné dans le forage est fonction d'une estimation des fluctuations des estimations de la diagraphie de substances relatives à des niveaux de profondeur précédentes du forage.

8. Procédé de diagraphie selon l'une des revendications 1, 6 et 7, caractérisé par le fait que le diagraphie filtrée des substances souterraines choisies est en plus soumise à un filtrage à retard fixe choisi · pour la production d'une diagraphie refiltrée de ces substances.

9. Procédé de diagraphie selon l'une des revendications 1, 6 et 7, dans lequel il est déterminé si un niveau de profondeur donné du forage est dans une zone homogène ou dans une zone de transition et la nature du filtre est modifiée en conséquence pour ce niveau de profondeur.

10. Procédé de diagraphie selon la revendication 1, caractérisé par le fait que le filtre qui détermine une estimation de la diagraphie des substances souterraines pour un niveau de profondeur donné dans le forage est conçu de façon à donner un plus grand poids à l'estimation relative au niveau de profondeur précédent en cas de variation moindre du rayonnement gamma total détecté à proximité du niveau de profondeur donné du forage et, sinon, à donner un plus grand poids à la diagraphie de fenêtres pour le niveau de profondeur donné.

11. Procédé de diagraphie selon la revendication 1, caractérisé par le fait que la phase d'établissement comprend le parcours par l'outil de diagraphie de l'intervalle de profondeur chiosi du forage.

12. Système de diagraphie comprenant:

des moyens d'établissement d'une diagraphie du rayonnement gamma détecté dans des fenêtres choisies d'énergie par un outil de diagraphie auquel on fait parcourir un intervalle choisi de profondeur du forage qui traverse des formations souterraines,

des moyens de transformation de cette diagraphie de fenêtres d'énergie en une diagraphie de substances souterraines émettrices de rayonnement gamma choisies, par un processus comprenant l'utilisation d'un filtre pour la production d'une diagraphie filtrée de ces substances, ce filtre étant mis en oeuvre par un calculateur numérique programmé ou une machine à circuits câblés, et

des moyens de production d'une représentation tangible de la diagraphie filtrée desdites substances,

caractérisé par le fait que le filtre est adaptatif et peut varier avec la profo·.deur dans le forage en fonction de la manuère dont le rayonnement gamma détecté varie avec cette profondeur.

# Fig.1.

DEPTH RECORDER — 20

SURFACE CONTROLLER — 21

14 — 19 — 16

13 — 15

CSU — 17

STORAGE — 18

11 — 10

10b

10a — DEPTH LEVEL _n_

22 — ENERGY WINDOWS LOG STORAGE

24 — FILTER UPDATING BY BOREHOLE DEPTH LEVEL

26 — MATERIAL CONCENTRATIONS LOG GENERATION

28 — BUFFER STORAGE

30 — MATERIAL CONCENTRATION LOG: STORAGE/ RECORDING/PLOTTING

$\frac{dN}{de}$

Th+U+K

40 K

X10 SCALE

214 Bi

208 Tl

K → U → Th →

ENERGY (MeV)

.15 .50 1.1 1.6 2 3

W1 W2 W3 W4 W5

# Fig.2.

$$W(n) \quad -30 \qquad\qquad GR(n) \quad -32$$

$$n = n\,(min) \quad -34 \qquad\qquad n = n\,(min) \quad -36$$

$$C(n) = fn \left[a, q, RG(n, n-1), \quad 38 \atop C(n-1)\right] \left[EXPRESSION (5)\right]$$

$$k\,(n) = fn\left[C(n)\right] \left[EXPRESSION (6)\right] \qquad C(n-1); \quad -40 \atop C[n(min)] = 1$$

$$42$$

$$X(n) = fn \left[K(n), X(n-1), M, \quad -44 \atop W(n)\right] \left[EXPRESSION (7)\right]$$

$$X(n-1); \atop X[n(min)] = MW[n(min)] \qquad\qquad STORE, RECORD, \atop PLOT\ X(n), \atop GR(n), K(n) \quad -48$$

$$46$$

$$52 \qquad\qquad 50$$

$$n = n+1 \xleftarrow{YES} n < n\,(max) \xrightarrow{NO}$$

$$END$$

Fig.3.

0 072 304

$$W_n, S_0, H, H_0 \quad \boxed{} \; 54$$

$$W_k = HA_0 \gamma_k + R_k \quad \boxed{} \; 56$$
$$\text{FOR } k = 1, 2 \cdots 6$$

$$Q_0 = (\gamma_1)^2 \cdot a_0 \quad \boxed{} \; 58$$

$$n = 1$$

Fig. 4.

$$K_n = (S_{n-1} + Q_{n-1}) H' [H(S_{n-1} + Q_{n-1}) H' + R_n]^{-1} \quad 60$$

$$X_n = X_{n-1} + K_n (W_n - H X_{n-1}) \quad 62$$

$$X_{n-1} \quad 64$$

$$S_n = (I - K_n H)(S_{n-1} + Q_{n-1}) \quad 66$$

$$S_{n-1} \quad 68$$

$$M = n + 1 \quad 70$$

$$n < n(max) \quad 72$$

YES    NO    END

$$W_{n+k} - H X_n = HA_n (\gamma_{n+k} - \hat{\gamma}_n) + R_{n+k} \quad 74$$
$$\text{FOR } k = 1, 2 \cdots 6$$

$$Q_n = (\gamma_{n+1} - \hat{\gamma}_n)^2 \cdot a_n \quad 76$$

$$Q_{n+1} \quad 78$$

3

Fig.5.

4

Fig. 6b.

Fig. 6a.

Fig. 6c.

Fig. 6d.

Fig. 7a.

Fig. 7b.

0 072 304